# EUROPEAN PATENT APPLICATION

(11) **EP 1 884 691 A1**
(43) Date of publication of application: **06.02.2008**
(21) Application number: 06756361.9
(22) Date of filing: 19.05.2006
(51) Int. Cl.: F16J 15/32

(54) **LIP TYPE SEAL**

(30) Priority: 27.05.2005 JP 2005155294
(71) Applicant: NOK Corporation, Minato-ku Tokyo 105-8585 (JP)
(72) Inventor: KONDO, Yosuke, Nihonmatsu-shi, Fukushima 9640811 (JP); SUZUKI, Yasuhiro, Nihonmatsu-shi, Fukushima 9640811 (JP)
(74) Representative: TBK-Patent
(86) International application number: PCT/JP2006/310005
(87) International publication number: WO 2006/126451

(57) **Abstract**

A resin lip type seal (1) installed in an annular clearance between a housing (12) and a reciprocating shaft (13) and capable of preventing the shapes of the tip parts (31, 41, 61) of lips (3, 4, 6) fitted to a mating member (12 or 13) from being changed with elapse of time. The shapes of the tip parts (31, 41, 61) of lips (3, 4, 6) are so determined that they comprise, in a well-balanced state, both a function for securing low leak which is the feature of sharp shape and a function for securing oil film thickness which is the feature of R-shape. Flat surfaces (21) with axial widths (W) having edge parts (22) are formed at the tip parts (31, 41, 61) of the lips (3, 4, 6). Also, the axial widths of the flat surfaces (21) are determined to be 5 to 30% of the overall axial widths (A) of the lips (3,4,6).

## Description

### BACKGROUND OF THE INVENTION

### Field of the Invention

The present invention relates to a lip type seal for reciprocation, which is made of a resin such as PTFE. This lip type seal is used for a fuel injection pump for a gasoline direct injection engine as a seal for a high pressure fuel pump and used in a hydraulic, pneumatic, or hydrostatic apparatus.

### Description of the Conventional Art

As for a lip type seal, sealing property is largely influenced by a shape of a tip part of a lip. When the lip type seal is molded by a material in which creep easily advances, e.g., PTFE resin, a cross section shape of a tip part of a lip is changed with elapse of time by compression force of a sliding on a shaft so as to change a sealing property. Thus, there is a problem that a stable sealing property cannot be obtained.

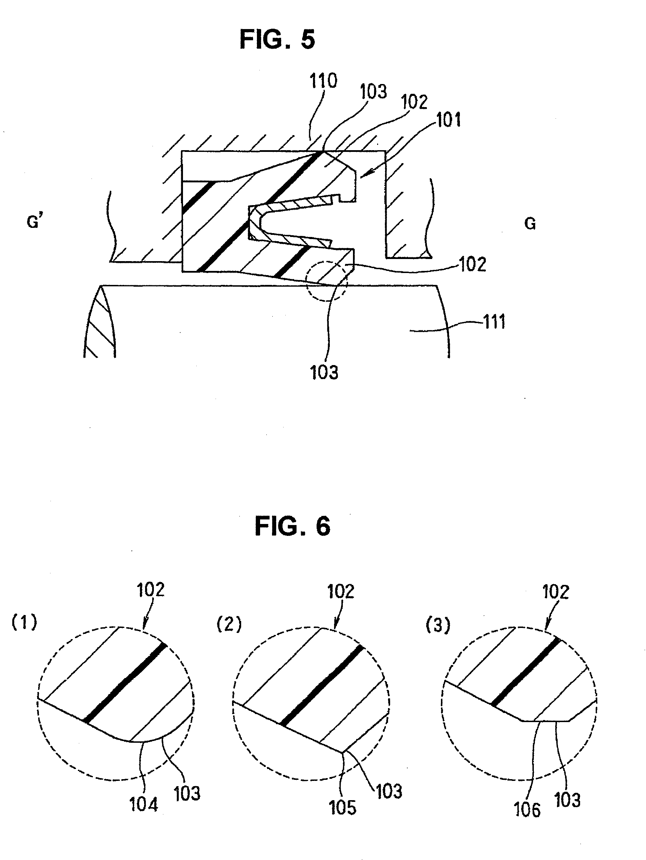

In particular, when a lip type seal 101 using a resin material such as PTFE is installed between a housing 110 and a shaft 111 as illustrated in FIG. 5, the lip type seal 101 is conventionally processed so as to have a round shape 104 or to have a sharp shape 105 illustrated in Fig. 6 (1) and Fig. 6 (2) respectively, which are expanded cross sectional views to illustrate shapes of a tip part 103 of a lip 102 encircled by a circle of a broken line. However, when the tip part 103 of the lip 102 is processed to have the round shape 104 and the sharp shape 105, there is a problem that the shape of the tip part 103 fitted to the housing 110 or the shaft 111, which is a matching member, becomes to be a flat state 106 by creeping after use as illustrated in FIG. 6 (3), and thus a sealing property is changed.

More particularly, a reciprocating seal for a shaft 111 which reciprocates, differently from a rotating seal, different stresses occur on the forward route and the backward route at the tip part 103 of the lip 102 contacting to the shaft 111, and the shape of the tip part 103 of the lip 102 becomes hardly uniform due to creep. Therefore, there is a problem that the round shape 104 and sharp shape 105 are more easily deformed after use than a case of the rotating seal, and thus a sealing property is changed.

In addition, the reason why a shape of the tip part 103 of the lip 102 is processed to have the round shape 104 is to obtain wear resistance by keeping an oil film on a sliding face. However, there is a problem that sealing property is somewhat inferior. When the shape of the tip part 103 is processed to have the sharp shape 105 so as to reduce a leaking amount, a sealing property can be kept, but wear resistance is somewhat inferior.

Further, the following patent documents disclose a technique to form an annular flat surface at a tip part of a seal lip of an oil seal with a predetermined axial width to fit the flat surface slidably to a matching member. However, they do disclose nothing about a resin lip type seal.
Patent Document 1: Japanese Patent Application Laid Open No. H11-311338
Patent Document 2: Japanese Patent Application Laid Open No. 2002-022027

### SUMMARY OF THE INVENTION

### Problems to be solved by the Invention

The present invention solves the above-described problems, and an objective of the present invention is to provide a resin lip type seal installed in an annular clearance between a fixing member housing and a reciprocating operation member and capable of preventing shapes of tip parts fitted to a matching member from being changed with elapse of time.

Further, another objective of the present invention is to provide shapes of tip parts of lips having both of function for securing low leak, which is the feature of a sharp shape, and function for securing oil film thickness, which is the feature of round shape, in a well balanced state.

### Means for Solving the Problems

In order to achieve the above-described objectives, according to the present invention, a resin lip type seal being installed in an annular clearance between a fixing member and a reciprocating operation member and including a hole part having an opening at one end, wherein flat surfaces with axial widths having edge parts are formed at tip parts of lips, and the flat surfaces fit to a matching member.

Further, a plate spring, a coil spring, or an O-ring at the hole part can be mounted inside the lip type seal. Furthermore, the axial widths of the flat surfaces are preferably determined to be 5 to 30% of the overall axial widths of the lips.

### Effectiveness of the Invention

The present invention has the following effects.

In the lip type seal according to the present invention including the above-described constitution, flat surfaces with axial widths having edge parts are formed at tip parts of lips. Thus, even when a seal main body is formed using a material in which creep easily advances, e.g., PTFE resin, cross section shapes of the tip parts of the lips are not changed with elapse of time due to compression force of a sliding on a shaft. Therefore, a designed stable sealing property can be kept for a long period of time.

Further, since the tip parts of the lips are formed to be flat surfaces, a contacting area is comparatively larger than the round shape or the sharp shape so as to reduce a surface pressure. Thus, even in a case of a reciprocating seal for a shaft which reciprocates, the shapes of the tip parts of the lips do not change with elapse of time. Therefore, a designed stable sealing property can be kept for a long period of time.

Further, the flat surfaces formed at the tip parts of the lips have edge parts. Thus, the edge parts exercise a low leak function, which is the feature in the case that the conventional tip parts of the lips have the sharp shape, and the flat surfaces exercise a function for securing an oil film thickness, which is the feature in the case that the conventional tip parts of the lips have the round shape. Therefore, the tip parts can have shapes for securing the both features in a well-balanced state.

Further, the present invention can prevent change of the tip parts with elapse of time, also by means that a plate spring is mounted inside the hole part. In addition, since pressing force in the radial direction increases, a sealing property can be improved.

Furthermore, when the axial widths of the flat surfaces are determined to be 5 to 30% of the overall axial widths of the lips, it is more preferable to obtain the above-described effects.

As explained above, a lip type seal according to the present invention is not formed to make edge or line contact, but is formed to make face contact. Thus, sealing property is improved, so that the lip type seal is suitable to use not only for a high viscosity liquid such as grease but also for a low viscosity liquid such as gasoline.

### BRIEF EXPLANATION OF DRAWINGS

FIG. 1 is a cross sectional view of a lip type seal according to embodiment 1 of the present invention,
FIG. 2 is a partially expanded cross sectional view of FIG. 1,
FIG. 3 is a cross sectional view in a mounting state of a lip type seal according to embodiment 1 of the present invention,
FIG. 4 is a cross sectional view of a lip type seal according to embodiment 2 of the present invention,
FIG. 5 is a cross sectional view of a lip type seal according to a conventional example, and
FIGS. 6 (1) to 6 (3) are partial expanded cross sectional views of FIG. 5

### EXPLANATION OF SYMBOLS

1: Lip type seal
2: Seal main body
3: Outer diameter side lip
31, 41, 61: Tip parts
4: Inner diameter side lip
5: Hole part
6: Oil lip
11: Plate spring
12: Housing (Fixing member)
13: Shaft (Operation member)
21: Flat surfaces
22: Edge parts
A: Overall axial widths
W: Axial widths
G: Gasoline side
G': Opposite gasoline side

### DETAILED DESCRIPTION OF PREFERRED EMBODIMENTS

Preferred embodiments of the present invention will be described below with reference to drawings. However, the present invention is not limited to the contents described in the embodiments unless there is any description to limit thereto.

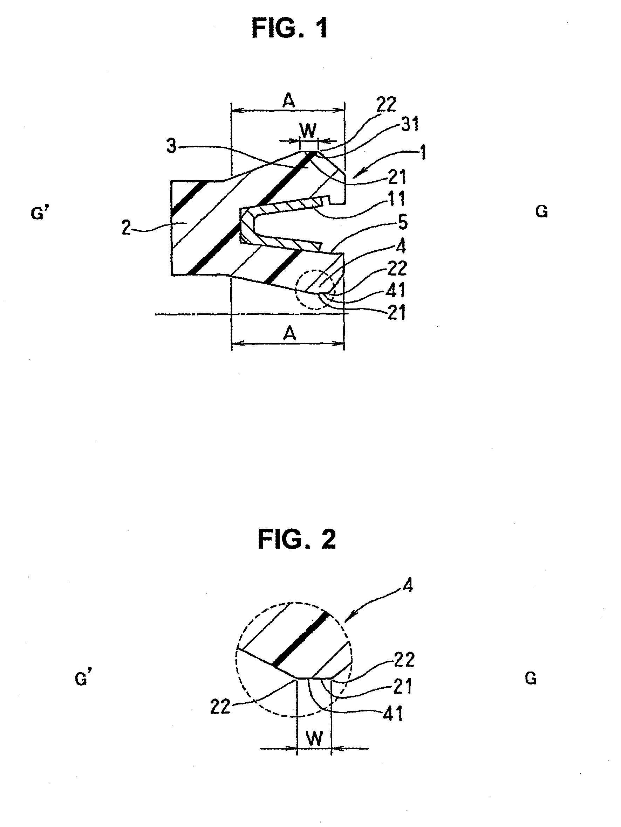

As illustrated in FIG. 1, a lip type seal 1 according to embodiment 1 of the present invention is installed in an annular clearance between a housing and a reciprocating shaft inserted into the inner peripheral side of the housing, which are not illustrated. The lip type seal 1 includes a seal main body 2 and a plate spring 11.

The seal main body 2 is integrally formed with PTFE resin. The seal main body 2 includes an outer diameter side lip 3 which fits to the housing and mainly seals gasoline existing at the right side in FIG. 1, an inner diameter side lip 4 which slidably fits to the shaft and mainly seals gasoline too, and a hole part 5 opening at the gasoline side (G).

FIG. 2 illustrates an expanded state of a tip part 41 of an inner diameter side lip 4 encircled by a broken line in FIG. 1. The tip part 41 is formed to have a flat surface 21, which has flat and predetermined width in the axial direction, and edge parts 22 at end parts in the width direction.

An axial width W of the flat surface 21 formed at the tip part 41 is determined to be 5 to 30% of an overall axial width A of the inner diameter side lip 4 illustrated in FIG. 1.

In addition, a tip part 31 of an outer diameter side lip 3 also is formed to have a flat surface 21, which has predetermined width in the axial direction, and edge parts 22 at end parts in the width direction, and the axial width W of the flat surface 21 is determined to be 5 to 30% of the overall axial width A of the outer diameter side lip 3 as illustrated in FIG. 1, like the inner diameter side lip 4.

A hole part 5 provided in the seal main body 2 having an opening at one end is provided inside with a plate spring 11 having a approximately U-shaped cross section so as to open toward the gasoline side (G). This plate spring 11 gives pressing force in the radial direction to the outer diameter side lip 3 and the inner diameter side lip 4.

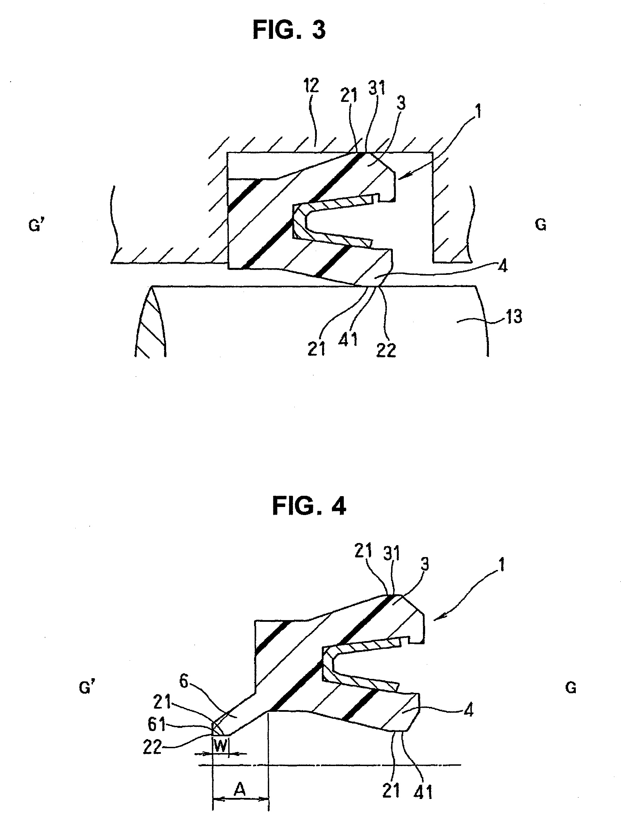

FIG. 3 illustrates the state in which the lip type seal 1 having the above-described structure is installed in an annular clearance between the housing 12 and the reciprocating shaft 13 inserted into the inner peripheral side of the housing 12. As for the outer diameter side lip 3, flat surface 21 formed at tip part 31 fits to the housing 12 which is a matching member. As for the inner diameter side lip 4, flat surface 21 formed at tip part 41 slidably fits to a shaft 13 which is a matching member.

Therefore, the flat surfaces 21 formed at the tip parts (31, 41) of the outer diameter side lip 3 and the inner diameter side lip 4 fit to the respective matching members . Thus, the change with elapse of time can be prevented, and designed sealing property at the time of initial use can be kept.

Further, the flat surfaces 21 formed at the tip parts (31, 41) of the outer diameter side lip 3 and the inner diameter side lip 4 have edge parts 22 at end parts in the axial direction. Thus, the edge parts 22 exercise a low leak function, which is the feature in the case of the conventional tip parts of the lips having a sharp shape, and the flat surfaces 21 exercise a function for securing an oil film thickness, which is the feature in the case of the conventional tip parts of the lips having a round shape. Therefore, tip parts of lips securing both of the low leak function and the function for securing an oil film thickness in a well-balanced state can be designed.

Further, the lip type seal 1 according to the present invention is not formed to make edge or line contact, but formed to make face contact by the flat surfaces 21. Thus, sealing property can be improved not only with respect to a high viscosity liquid such as grease but also with respect to a low viscosity liquid such as gasoline.

In addition, the above-described embodiment discloses the case of the plate spring 11 being mounted inside the hole part 5. However, an elastic body such as a coil spring or an O-ring having the similar operational effects can be used instead of the plate spring 11. Further, the lip type seal 1 exercises a self seal function by applying pressure and may be used without an elastic body such as a plate spring at the hole part 5.

FIG. 4 is a cross sectional view of a lip type seal 1 according to embodiment 2 of the present invention . In addition to the structure of the above-described embodiment 1, the lip type seal 1 integrally includes an oil lip 6 having an approximately rectangular cross section at the opposite side (G') to gasoline side, and the oil lip 6 slidably fits to the reciprocating shaft.

A tip part 61 of the oil lip 6 is formed to have a flat surface 21 having edge parts 22 at end parts in the width direction, and the axial widths W of the flat surface 21 are determined to be 5 to 30% of the overall axial widths (A) of the oil lip 6, like the tip parts (31, 41) of the outer diameter side lip 3 and the inner diameter side lip 4.

## Claims

1. A resin lip type seal (1) being installed in an annular clearance between a fixing member (12) and a reciprocating operation member (13) and comprising a hole part (5) having an opening at one end, wherein flat surfaces (21) with axial widths (W) having edge parts (22) are formed at tip parts (31, 41, 61) of lips (3, 4, 6), and the flat surfaces (21) fit to a matching member (12 or 13).

2. The resin lip type seal as claimed in claim 1, wherein a plate spring (11), a coil spring, or an O-ring is mounted inside the hole part (5).

3. The resin lip type seal as claimed in claim 1 or claim 2, wherein the axial widths (W) of the flat surfaces (21) are determined to be 5 to 30% of the overall axial widths (A) of the lips (3, 4, 6).
